(19) Europäisches Patentamt
European Patent Office
Office européen des brevets

(11) EP 3 945 082 A1

(12) **EUROPÄISCHE PATENTANMELDUNG**

(43) Veröffentlichungstag:
**02.02.2022 Patentblatt 2022/05**

(21) Anmeldenummer: **20188031.7**

(22) Anmeldetag: **28.07.2020**

(51) Internationale Patentklassifikation (IPC):
***C04B 26/14** (2006.01)* ***C04B 24/42** (2006.01)*

(52) Gemeinsame Patentklassifikation (CPC):
(C-Sets verfügbar)
**C04B 26/14;** C04B 2111/00715; C04B 2111/76; C04B 2201/50 (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder: **BEHRENS, Nicole**
**81245 München (DE)**

(74) Vertreter: **Hilti Aktiengesellschaft**
**Corporate Intellectual Property**
**Feldkircherstrasse 100**
**Postfach 333**
**9494 Schaan (LI)**

(54) **HÄRTER FÜR EPOXIDHARZMASSEN ZU BEFESTIGUNGSZWECKEN**

(57) Die vorliegende Erfindung betrifft ein mehrkomponentiges Befestigungsmörtelsystem, welches in einer Komponente (A) Reaktiv-Kunstharz auf Epoxidharzbasis und in einer weiteren Komponente (B) Härter beinhaltet. Gemäß der vorliegenden Erfindung liegt in mindestens einer der Komponenten (A) oder (B) weiterhin eine Kombination von (i) mindestens einem Füllstoff (F), ausgewählt aus Oxiden von Silicium und Aluminium, oder Mischoxiden in Gegenwart weiterer Kationen, dessen Mittelkorn $d_{50}$ 10 µm oder weniger beträgt, und (ii) mindestens einem mindestens eine Si-gebundene hydrolysierbare Gruppe beinhaltendes Silan (S) in einer Menge von mindestens 3 Gew.-%, bezogen auf das Gesamtgewicht der jeweiligen Komponente, vor; oder der Füllstoff (F) liegt in mit einem derartigen Silan (S) modifizierter Form vor.

EP 3 945 082 A1

(52) Gemeinsame Patentklassifikation (CPC): (Forts.)

C-Sets
**C04B 26/14, C04B 14/06, C04B 14/303,**
**C04B 22/085, C04B 24/121, C04B 24/42,**
**C04B 40/065**

## Beschreibung

Die vorliegende Erfindung betrifft ein mehrkomponentiges Befestigungsmörtelsystem, welches in einer Komponente (A) Reaktiv-Kunstharz auf Epoxidharzbasis und in einer weiteren Komponente (B) Härter beinhaltet; sowie dessen Verwendung zum Befestigen von Verankerungselementen. Die vorliegende Erfindung betrifft ferner ein Verfahren zur Befestigung von einem Verankerungselement in einem Loch oder Spalt in einem Bausubstrat unter Verwendung des mehrkomponentigen Befestigungsmörtelsystems. Ferner betrifft die vorliegende Erfindung die Verwendung einer Kombination von (i) mindestens einem bestimmtem Füllstoff (F) und (ii) einer bestimmten Menge mindestens eines mindestens eine Si-gebundene hydrolysierbare Gruppe beinhaltenden Silans (S), in einer Komponente eines mehrkomponentigen Befestigungsmörtelsystems zum Erhöhen der Verbundspannung gegenüber Füllstoffen mit größerem Mittelkorn oder zum Beschleunigen der Härtung insbesondere bei niedriger Temperatur.

## Hintergrund

Im Bauwesen sind Zuschlagstoffe in Form von partikulären Füllstoffen für die Verwendung in polymerbildenden chemischen Verankerungsmassen (manchmal auch als *"chemische Dübel"* bezeichnet) mit ein oder mehreren Komponenten, beispielsweise in Form von Zweikammerkartuschen oder Zweikammerpatronen, zum Befestigen von Verankerungselementen in Bohrlöchern bekannt. Oft wird der Art der Füllstoffe, sofern es sich nicht um solche handelt, die, wie Zement, selbst beispielsweise durch hydraulisches Abbinden zur Verfestigung beitragen, nicht sehr viel Bedeutung beigemessen.

EP2826796 beschreibt die Verwendung einer Härterzusammensetzung für Mehrkomponenten-Mörtelmassen auf Epoxid-Amin-Basis zur chemischen Befestigung. Die Mehrkomponenten-Mörtelmasse enthält (A) eine Harzkomponente, die als härtbare Verbindung mindestens ein Epoxidharz und gegebenenfalls mindestens einen Reaktivverdünner umfasst, und (B) eine Härterkomponente, die einen Hybridhärter umfasst. Der Hybridhärter ist ein Gemisch aus (a) mindestens einem Amin, ausgewählt unter aliphatischen, alicyclischen oder aromatischen Aminen, als Härter, und (b) einem Novolakharz als Beschleuniger, wobei das Novolakharz in einer Menge von 30 bis 45 Gew.-%, bezogen auf das Gesamtgewicht des Hybridhärters, enthalten ist. Die Mehrkomponenten-Mörtelmasse kann weiterhin Füllstoffe und/oder Verstärkungsmittel, wie beispielsweise Zement oder Quarzmehl mit einem Mittelkorn $d_{50}$ von z.B. 16 $\mu$m enthalten.

EP3626756 beschreibt ein Mehrkomponenten-Epoxidharzsystem zur chemischen Befestigung von Konstruktionselementen, enthaltend eine Epoxidharzmasse mit einer Härterzusammensetzung. Die Erfindung betrifft auch die Verwendung eines Salzes (S) als Beschleuniger in einer Epoxidharzmasse zur chemischen Befestigung, wobei die Epoxidharzmasse eine anorganisches Salz sowie 3-Aminomethyl-3,5,5-trimethylcyclohexan (IPDA) und mindestens ein weiteres gegenüber Epoxidgruppen reaktives cycloaliphatisches Amin, wie beispielsweise 1,3-Cyclohexandimethanamin (1,3-BAC) umfasst. Das Mehrkomponenten-Epoxidharzsystem kann ferner anorganische Füllstoffe, insbesondere nicht oberflächenbehandelte Quarzmehle, bevorzugt Millisil W12 ($d_{50}$ = 16 $\mu$m), enthalten.

EP3000792 betrifft ein mehrkomponentiges Befestigungskunstmörtelsystem zum Befestigen von Verankerungselementen in Bausubstraten, welches in einer Komponente Reaktiv-Kunstharze auf (i) Urethan(meth)acrylatbasis, (ii) Epoxidharzbasis oder (iii) auf Basis radikalisch härtender (bzw. härtbarer) ungesättigter Reaktiv-Harze, in einer weiteren Komponente Härter und mindestens einen Füllstoff, ausgewählt aus Oxiden von Silicium und Aluminium, oder Mischoxiden mit Gegenwart weiterer Kationen, dessen Mittelkorn $d_{50}$ bei 50 $\mu$m oder weniger liegt, beinhaltet. Das mehrkomponentige Befestigungskunstmörtelsystem kann weiterhin gegebenenfalls ein Silan mit mindestens einer hydrolysierbaren Gruppe enthalten. Über die Aushärtegeschwindigkeit dieser Systeme bei niedrigen Temperaturen wird in der EP3000792 nicht berichtet.

Die Reaktion von Amin als Härter und Epoxidharzen verläuft bei Temperaturen unter dem Gefrierpunkt nur langsam ab. Daher gibt es gegenwärtig nur wenige Epoxidharzmassen, die im Prinzip zu Befestigungszwecken bei Temperaturen unterhalb von +5°C verwendet werden können (Handelsnamen sind beispielsweise RE 500 V3 (Hilti) und FIS EM plus (Fischerwerke)). Aber auch bei solchen Epoxidharzmassen beträgt die Aushärtezeit bei -5°C mindestens eine Woche.

Die üblichen Beschleunigungssysteme sind entweder zu schwach, um eine schnellere Reaktion bei diesen Temperaturen zu erreichen, oder sie wären dann in wärmerer Umgebung (z. B. 40°C) zu schnell in der Aushärtung und wären daher bei solchen höheren Temperaturen nicht mehr verwendbar.

Eine Aufgabe der vorliegenden Erfindung ist es daher eine Formulierung bereitzustellen, die im Vergleich zum Stand der Technik eine beschleunigte Aushärtung bei Temperaturen unter +5°C aufweist. Weitere Aufgaben der vorliegenden Erfindung sind das Erhöhen der Verbundspannung gegenüber Füllstoffen mit größerem Mittelkorn (z.B. $d_{50}$ > 10 $\mu$m) oder das Beschleunigen der Härtung insbesondere bei niedriger Temperatur.

## Zusammenfassung der Erfindung

Die Aufgabe wird gelöst durch die gleichzeitige Verwendung eines Füllstoffs auf Basis von Aluminium- oder Siliciumdioxid oder Mischoxiden in Gegenwart weiterer Kationen mit einem $d_{50}$-Wert von kleiner 10 $\mu$m und einem Silan, das mit mindestens 3 Gew.% in der gleichen Komponente vorliegt. Die vorliegende Erfindung betrifft daher ein mehrkomponentiges Befestigungsmörtelsystem, welches in einer Komponente (A) Reaktiv-Kunstharz auf Epoxidharzbasis und in einer weiteren Komponente (B) Härter beinhaltet, wobei in mindestens einer der Komponenten (A) oder (B) weiterhin eine Kombination von (i) mindestens einem Füllstoff (F), ausgewählt aus Oxiden von Silicium und Aluminium, oder Mischoxiden in Gegenwart weiterer Kationen, dessen Mittelkorn $d_{50}$ 10 $\mu$m oder weniger beträgt, und (ii) mindestens einem mindestens eine Si-gebundene hydrolysierbare Gruppe beinhaltendes Silan (S) in einer Menge von mindestens 3 Gew.-%, bezogen auf das Gesamtgewicht der jeweiligen Komponente, vorliegt. In einer alternativen Ausführungsform liegt der Füllstoff (F) in mit einem derartigen Silan (S) modifizierter Form vor, wobei mindestens 3 Gew.-%, bezogen auf das Gesamtgewicht der jeweiligen Komponente, an Silan (S) zur Modifizierung verwendet werden.

Die Erfindung betrifft ferner die Verwendung eines mehrkomponentiges Befestigungsmörtelsystems wie vorstehend definiert zum Befestigen von Verankerungselementen in einem Loch oder Spalt in einem Bausubstrat.

Die Erfindung betrifft auch ein Verfahren zur Befestigung von einem Verankerungselement in einem Loch oder Spalt in einem Bausubstrat, bei dem ein mehrkomponentiges Befestigungsmörtelsystem wie vorstehend definiert und ein Verankerungselement in das Loch oder den Spalt eingebracht und aushärten gelassen werden.

Ferner betrifft die Erfindung die Verwendung einer Kombination von (i) mindestens einem Füllstoff (F), ausgewählt aus Oxiden von Silicium und Aluminium, oder Mischoxiden in Gegenwart weiterer Kationen, dessen Mittelkorn $d_{50}$ 10 $\mu$m oder weniger beträgt, und (ii) mindestens einem mindestens eine Si-gebundene hydrolysierbare Gruppe beinhaltendes Silan (S), in einer Komponente eines mehrkomponentigen Befestigungsmörtelsystems zum Erhöhen der Verbundspannung gegenüber Füllstoffen mit größerem Mittelkorn oder zum Beschleunigen der Härtung insbesondere bei niedriger Temperatur, wobei das mindestens eine Si-gebundene hydrolysierbare Gruppe beinhaltende Silan (S) in einer Menge von mindestens 3 Gew.-%, bezogen auf das Gesamtgewicht der jeweiligen Komponente, vorliegt.

Die Erfindung ermöglicht eine beschleunigte Aushärtung von Epoxidharzmassen bei niedriger Temperatur. Da marktübliche Epoxidharzmassen für Ankeranwendungen bisher Aushärtezeiten bei -5°C von mindestens einer Woche (168 Stunden) aufweisen, ermöglicht bereits eine geringe Beschleunigung der Reaktion eine Reduktion der Aushärtezeit um z. B. 24 Stunden, was die Produktivität auf der Baustelle erhöht.

Weitere Ausführungsformen der vorliegenden Erfindung sind in der nachstehenden detaillierten Beschreibung und den beigefügten abhängigen Patentansprüchen beschrieben.

## Detaillierte Beschreibung der Erfindung

Im Sinne der Erfindung haben die hier und in der nachfolgenden Beschreibung verwendeten Begriffe die folgende Bedeutung:

*"aliphatische Verbindungen"* sind acyclische oder cyclische, gesättigte oder ungesättigte Kohlenstoffverbindungen, ausgenommen aromatische Verbindungen,

"*cycloaliphatische Verbindungen*" sind Verbindungen mit einer carbocyclischen Ringstruktur, ausgenommen Benzolderivate oder andere aromatische Systeme,

"*aromatische Verbindungen*" sind Verbindungen, die der Hückel (4n+2)-Regel folgen, und

"*Amine*" sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd Ed. (the "Gold Book"), Compiled by A. D. McNaught and A. Wilkinson, Blackwell Scientific Publications, Oxford (1997)).

Wie vorstehend ausgeführt betrifft die vorliegende Erfindung ein mehrkomponentiges Befestigungsmörtelsystem. Das mehrkomponentige Befestigungsmörtelsystem umfasst mindestens eine Komponente (A) und mindestens eine Komponente (B), wobei Komponente (A) mindestens ein Reaktiv-Kunstharz auf Epoxidharzbasis und Komponente (B) mindestens einen Härter beinhaltet.

Ferner liegt in einer der Komponenten (A) oder (B) eine Kombination von

(i) mindestens einem Füllstoff (F), ausgewählt aus Oxiden von Silicium und Aluminium, oder Mischoxiden in Gegenwart weiterer Kationen, dessen Mittelkorn $d_{50}$ 10 $\mu$m oder weniger beträgt, und
(ii) mindestens einem mindestens eine Si-gebundene hydrolysierbare Gruppe beinhaltendes Silan (S) in einer Menge von mindestens 3 Gew.-%, bezogen auf das Gesamtgewicht der jeweiligen Komponente, vor.

Alternativ liegt der Füllstoff (F) ausgewählt aus Oxiden von Silicium und Aluminium, oder Mischoxiden in Gegenwart weiterer Kationen, dessen Mittelkorn $d_{50}$ 10 $\mu$m oder weniger beträgt, in mit einem mindestens eine Si-gebundene hydrolysierbare Gruppe beinhaltendes Silan (S) modifizierter, d.h. obeflächenmodifizierter Form vor, wobei mindestens 3 Gew.-%, bezogen auf das Gesamtgewicht der jeweiligen Komponente, an Silan (S) zur Oberflächenmodifizierung verwendet werden.

Füllstoff (F) weist gemäß der vorliegenden Erfindung ein Mittelkorn $d_{50}$ von 10 $\mu$m oder weniger auf. In einer bevorzugten Ausführungsform weist Füllstoff (F) ein Mittelkorn $d_{50}$ von 5 $\mu$m oder weniger, vorzugsweise von 2,5 $\mu$m oder weniger, stärker bevorzugt von 1 $\mu$m oder weniger, auf.

Das Mittelkorn $d_{50}$ ist definiert als die Korngröße, bei der 50 Gew.-% der Teilchen kleiner ist als die angegebene Teilchengröße $d_{50}$. Es gibt unterschiedliche und technisch allgemein anerkannte Verfahren zur Bestimmung der $d_{50}$, z.B. mittels Sieblinienbestimmungen klassisch mit Sieben oder beispielsweise (insbesondere bei kleineren Partikeln mit unter 1 $\mu$m Durchmesser) durch Lasergranulometrie. Die in den nachstehenden Beispielen genannten $d_{50}$-Werte entsprechen Herstellerangaben.

Füllstoff (F) wird gemäß der Erfindung ausgewählt aus Oxiden von Silicium und Aluminium, oder Mischoxiden in Gegenwart weiterer Kationen. Oxide von Silicium oder Aluminium sind in erster Linie Siliciumdioxid ($SiO_2$) oder Aluminiumoxid ($Al_2O_3$). Gegebenenfalls vorhandene Mischoxide sind vor allem Oxide von Silicium und Aluminium in zusätzlicher Gegenwart von ein oder mehreren Oxiden ausgewählt aus Oxiden der Gruppe von Metallen, die insbesondere aus Calcium, Titan, Eisen, Natrium oder dergleichen besteht. In einer bevorzugten Ausführungsform wird Füllstoff (F) aus Quarz, Silikaten, oder Aluminiumoxid, insbesondere $\alpha$-Aluminiumoxid, ausgewählt. Derartige Füllstoffe (F) sind im Handel erhältlich, beispielsweise das Aluminiumoxid RG 4000 von Almatis, Deutschland, mit einem Mittelkorn $d_{50}$ von 0,6 $\mu$m oder das Quarzmehl Sikron SF 800 der Quarzwerke Frechen, Deutschland. Ausgeschlossen ist Aluminiumhydroxid als einziger Füllstoff (F) in der jeweiligen Komponente.

In einer bevorzugten Ausführungsform liegt Füllstoff (F) in einer Menge von mindestens 5 Gew.-%, bezogen auf das Gesamtgewicht der jeweiligen Komponente in dem erfindungsgemäßem mehrkomponentigen Befestigungsmörtelsystem, vor. Vorzugsweise liegt Füllstoff (F) in der entsprechenden Komponente in einer Menge von mindestens 10 Gew.-%, stärker bevorzugt mindestens 20 Gew.-% vor, wie etwa 5 Gew.-% bis 50 Gew.-%, 10 Gew.-% bis 45 Gew.-% oder 20 Gew.-% bis 40 Gew.-%.

Als weiteren notwendigen Bestandteil enthält die Kombination mindestens ein mindestens eine Si-gebundene hydrolysierbare Gruppe beinhaltendes Silan (S) in derselben Komponente, in der auch der vorstehend beschriebene Füllstoff (F) vorliegt. Das Silan (S) kann beispielsweise ausgewählt werden 3-(Meth)acryloyl-oxypropyltrialkoxysilan, 3-(Meth)acryloyl-oxymethyltrialkoxysilan, 3-(Meth)acryloyl-oxypropylmethyldialkoxysilan, 3-Glycidyloxypropyltrialkoxysilan, Glycidyloxymethyltrialkoxysilan, 3-Glycidyloxypropylmethyldi-alkoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyl-trialkoxysilan, N-Phenyl-3-aminoethyl-3-aminopropyl-trialkoxysilan, 2-Aminoethyl-3-aminopropyl-trialkoxysilan, Bis-(3-trialkoxysilylpropyl)amin, 3-Mercaptopropyltrialkoxysilan, 3-Mercaptopropylmethyldialkoxysilan, Alkenylalkoxysilan, Trialkoxysilylpropyldiethylentetramin und/oder Tetraalkoxysilan, oder einem Gemisch von zwei oder mehreren davon. Gegebenenfalls kann der Füllstoff (F) vorab mit einem derartigen Silan (S) oberflächenmodifiziert werden.

Bevorzugt werden Silane, die reaktive Gruppen, wie Epoxidgruppen oder Aminogruppen, sowie hydrolysierbare, an Si gebundene Gruppen, wie Alkoxy (z.B. mit 1 bis 7 Kohlenstoffatomen, wie Methoxy- oder Ethoxy) oder Halogeno, wie Chloro, aufweisen. In einer bevorzugten Ausführungsform wird das Silan (S) ausgewählt aus 3-Glycidyloxypropyltrialkoxysilan, wie 3-Glycidyloxypropyltrimethoxysilan (GLYMO) oder - ethoxysilan, Glycidyloxymethyltrialkoxysilan, wie Glycidyloxymethyltrimethoxysilan oder Glycidyloxymethyltriethoxysilan, 3-Glycidyloxypropylmethyldi-alkoxysilan, wie 3-Glycidyloxypropylmethyldi-methoxysilan oder 3-Glycidyloxypropylmethyldi-ethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyltriethoxysilan, 3-Aminopropyl-trialkoxysilan, wie 3-Aminopropyl-trimethoxysilan (AMMO) oder 3-Aminopropyl-triethoxysilan (AMEO), N-Phenyl-3-aminoethyl-3-aminopropyl-trialkoxysilan, wie N-Phenyl-3-aminoethyl-3-aminopropyl-trimethoxysilan, 2-Aminoethyl-3-aminopropyl-trialkoxysilan, wie 2-Aminoethyl-3-aminopropyl-trimethoxysilan (DAMO), Bis-(3-trialkoxysilylpropyl)amin, wie Bis-(3-trimethoxysilylpropyl)amin oder Bis-(3-triethoxysilylpropyl)amin, Trialkoxysilylpropyldiethylentetramin, wie Trimethoxysilylpropyldiethylentetramin (TRIAMO) oder Triethoxysilylpropyldiethylentetramin, und/oder Tetraalkoxysilan, wie Tetramethoxysilan, Tetraethoxysilan oder Tetrapropoxysilan, oder einem Gemisch von zwei oder mehreren davon. Besonders bevorzugt als Silan (S) sind beispielsweise 3-Aminopropyl-triethoxysilan oder 3-Glycidyloxypropyltrimethoxysilan, z.B. Dynasylan GLYMO von Evonik Industries, Deutschland.

Das vorstehend beschriebene Silan (S) wird in der betreffenden Komponente in einer Menge von mindestens

3 Gew.-% eingesetzt, entweder als Zusatz oder zum Modifizieren des Füllstoffes (F) vor der Zugabe. In einer bevorzugten Ausführungsform wird das Silan (S) in einer Menge von mindestens 4 Gew.-%, wie beispielsweise 3 Gew.-% bis 10 Gew.-% oder 4 Gew.-% bis 7 Gew.-%, bezogen auf das Gesamtgewicht der betreffenden Komponente, verwendet.

Die vorstehend beschriebene Kombination aus mindestens einem Füllstoff (F) und mindestens einem Silan (S) kann in der Komponente (A) oder der Komponente (B) des erfindungsgemäßen mehrkomponentigen Befestigungsmörtelsystems vorliegen. In einer bevorzugten Ausführungsform liegt die Kombination aus mindestens einem Füllstoff (F) und mindestens einem Silan (S) in der Komponente (A), die auch Reaktiv-Kunstharz auf Epoxidharzbasis enthält, vor.

Bei dem Befestigungsmörtelsystem gemäß der vorliegenden Erfindung handelt es sich um ein "*mehrkomponentiges*" System. Ein mehrkomponentiges Befestigungsmörtelsystem enthält mehrere voneinander getrennt gelagerte Komponenten, so dass eine Härtung der in den Komponenten enthaltenen Inhaltsstoffe erst nach dem Vermischen aller Komponenten erfolgt. Insbesondere enthält das erfindungsgemäße mehrkomponentige Befestigungsmörtelsystem mindestens eine Komponente (A), die Reaktiv-Kunstharz auf Epoxidharzbasis beinhaltet, und mindestens eine weitere Komponente (B), die Härter beinhaltet. In einer bevorzugten Ausführungsform handelt es sich bei dem erfindungsgemäßen Befestigungsmörtelsystem um ein Zwei-Komponenten-System ("*2K-System").*

Im Folgenden werden die Bestandteile der Komponenten (A) und (B) des erfindungsgemäßen mehrkomponentigen Befestigungsmörtelsystems beispielhaft anhand eines 2K-Systems näher erläutert.

Komponente (A)

Komponente (A) des mehrkomponentiges Befestigungsmörtelsystems der Erfindung umfasst mindestens ein Reaktiv-Kunstharz auf Epoxidharzbasis ("*Epoxidharzkomponente (A)*"). Als härtbares Epoxidharz zur Verwendung in Komponente (A) der vorliegenden Erfindung kommt eine Vielzahl der hierfür dem Fachmann bekannten und kommerziell erhältlichen Verbindungen in Betracht, die im Mittel mehr als eine Epoxid-Gruppe, vorzugsweise zwei Epoxid-Gruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht (EEW) von 120 bis 2000 g/EQ aufweisen, vorzugsweise von 140 bis 400, insbesondere 155 bis 195, beispielsweise 165 bis 185 aufweisen. Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem EEW von 150 bis 300 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von $Mn \leq 2000$ g/mol.

Der Anteil an Epoxidharz an der Epoxidharzkomponente (A) beträgt >0 bis 100 Gew.-%, bevorzugt 10 bis 70 Gew.-% und besonders bevorzugt 30 bis 60 Gew.-%, bezogen auf das Gesamtgewicht der Epoxidharzkomponente (A).

Die Epoxidharzkomponente (A) kann wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether, Trimethylolpropantriglycidylether (TMPTGE) oder Trimethylolethantriglycidylether (TMETGE), wobei Trimethylolethantriglycidylether bevorzugt ist. Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE) oder 1,4-Butandioldiglycidylether (BDDGE) und Trimethylolethantriglycidylether (TMETGE).

Die Reaktivverdünner liegen bevorzugt in einer Menge von 0 bis 60 Gew.-% vor, insbesondere von 1 bis 20

Gew.-%, bezogen auf das Gesamtgewicht der Epoxidharzkomponente (A).

Der Anteil der Epoxidharzkomponente (A) an der Gesamtmasse des Mehrkomponenten-Epoxidharzsystems beträgt vorzugsweise 5 bis 90 Gew.-%, insbesondere 20 bis 80 Gew.-%, 30 bis 70 Gew.-% oder 40 bis 60 Gew.-%.

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Des Weiteren kann die Epoxidharzkomponente (A) übliche Zusätze enthalten, insbesondere gewöhnliche Füllstoffe mit einem Mittelkorn $d_{50}$ von mehr als 10 $\mu$m oder Thixotropiermittel (Verdicker).

Als "*gewöhnliche*" Füllstoffe ($d_{50}$ > 10 $\mu$m) dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Des Weiteren können auch Verdicker wie pyrogene Kieselsäure als anorganischer Füllstoff verwendet werden. Als Füllstoffe können insbesondere nicht oberflächenbehandelte Quarzmehle eingesetzt werden.

Der Anteil an gewöhnlichen Füllstoffen mit einem Mittelkorn $d_{50}$ von mehr als 10 $\mu$m beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Epoxidharzkomponente (A).

Weitere denkbare Zusätze zur Epoxidharzkomponente (A) sind ferner Thixotropiermittel, wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

In einer bevorzugten Ausführungsform liegt ferner die vorstehend beschriebene Kombination aus mindestens einem Füllstoff (F) und mindestens einem Silan (S) in der Komponente (A) vor.

<u>Komponente (B)</u>

Komponente (B) des mehrkomponentiges Befestigungsmörtelsystems der Erfindung umfasst mindestens einen Härter (*"Härterkomponente (B)"*). Der Härter beinhaltet mindestens eine zur Epoxidhärtung gebräuchliche Verbindung (Reaktionspartner bei der Polyaddition). Der Begriff "*Härter*" bedeutet dabei vorzugsweise mindestens eine zur Epoxidhärtung gebräuchliche Verbindung mit oder ohne Füllstoffzusatz und/oder weitere Zusätze, wie Wasser, Verdickungsmittel und/oder weitere Zusatzstoffe, mit anderen Worten, die komplette Härterkomponente. Übliche Zusätze können zugesetzt sein, wie z.B. gewöhnliche Füllstoffe mit einem Mittelkorn $d_{50}$ von mehr als 10$\mu$m, wie bereits vorstehend im Zusammenhang mit Komponente (A) beschrieben, und/oder (insbesondere zur Herstellung einer Paste oder Emulsion) Lösungsmittel, wie Benzylalkohol und/oder Wasser, wobei Wasser als Reaktionspartner für die Hydrolyse von hydrolysierbare Gruppen beinhaltenden Silane oder Siloxanen dienen kann und vorzugsweise nur enthalten ist, wenn die Härterkomponente (B) ansonsten frei von Silanen oder Siloxanen ist. Die weiteren Zusätze der Härterkomponente eines erfindungsgemäßen Befestigungsmörtelsystems auf Epoxidbasis können beispielsweise in einem Gewichtanteil von insgesamt 0,01 bis 70 Gew.-%, z.B. von 1 bis 40 Gew.-% bezogen auf die Härterkomponente (B) vorgesehen sein.

Bei den zur Epoxidhärtung gebräuchlichen Verbindungen (die als Reaktionspartner bei der Polyaddition fungieren) handelt es sich insbesondere um solche mit zwei oder mehr Gruppen, ausgewählt aus Amino, Imino, und Mercapto, beispielsweise entsprechende Amine, Thiole, oder Aminothiole, oder Gemische davon, beispielsweise wie in Lee H and Neville K, "Handbook of Epoxy Resins" (New. York: McGraw-Hill), 1982, genannt.

Die zur Epoxidhärtung (allgemein) gebräuchlichen Verbindungen umfassen beispielsweise in einer Ausführungsform der Erfindung Di- oder Polyamine wie insbesondere aliphatische, heteroaliphatische, cycloaliphatische, cycloheteroaliphatische und aromatische Di- oder Polyamine, Amidoamine, Aminaddukte (z.B.: Bucherer-Addukte wie in der Druckschrift EP 0 824 124 offenbart), Polyetherdiamine, Polyphenyl/Polymethylen-polyamine oder Mannichbasen.

Gemäß der vorliegenden Erfindung werden bevorzugt Diamine, Polyamine oder Mannichbasen in der Härterkomponente (B) verwendet.

Beispiele für besonders geeignete Di- oder Polyamine sind 1,2-Diaminoethan (Ethylendiamin), 1,2-Propandiamin, 1,3-Propandiamin, 1,4-Diaminobutan, 2,2-Dimethyl-1, 3-propandiamin (Neopentandiamin), Diethylaminopropylamin (DEAPA), 2-Methyl-1,5-pentamethylendiamin (Dytek A), 1,3-Diaminopentan, 2,2,4- oder 2,4,4-Trimethyl-1, 6-diaminohexan und Gemische davon (TMD), 1,2-Bis(aminomethyl)cyclohexan, Hexamethylendiamin (HMD), 1,4-Diaminocyclohexan (1,4-DACH), Bis(4-amino-3-methylcyclohexyl)methan, Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, 3-Aminomethyl-3,5,5-trimethylcyclohexan (IPDA),

1,3-Cyclohexandimethanamin (1,3-BAC), Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropylaminopropylamin (DMAPAPA), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.02,6]decan (Isomerengemisch, tricyclischer primärer Amine; TCD-Diamin), Methylcyclohexyl-diamin (Baxxodur EC 210, MDACH), N,N'-Diaminopropyl-2-methylcyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl) propan-1,3-diamin.

Bevorzugte Polyamine sind mXDA, Dytek A, IPDA, 1,3-BAC und MDACH.

Bei den erfindungsgemäß einzusetzenden Mannichbasen handelt es sich um die Reaktionsprodukte von Phenolen, wie Phenol, Brenzcatechin, Resorcin, Hydrochinon, Hydroxyhydrochinon, Phloroglucin, Pyrogallol, o-Kresol, m-Kresol, p-Kresol, oder Bisphenolen, wie Bisphenol F oder Bisphenol A, insbesondere Phenol, oder von styrolisierten Phenolen, wie nachfolgend definiert, mit den vorstehend definierten Di- oder Polyaminen und Aldehyden oder durch Zersetzung Aldehyde liefernde Verbindungen, vor allem aliphatischen Aldehyden, wie insbesondere Formaldehyd (wobei dieser Begriff auch und durch Zersetzung Formaldehyd liefernde Verbindungen wie Trioxan oder Paraformaldehyd einschließen kann), wobei die Aldehyde vorteilhaft als wässrige Lösung (insbesondere bei erhöhter Temperatur, wie bei 50 bis 90 °C) zu- und umgesetzt werden.

Die Herstellung der Mannichbasen kann erfindungsgemäß nach an sich bekannten Verfahren erfolgen, unter Verwendung der oben definierten geeigneten Amine. Beispielsweise kann sie, z.B. unter Verwendung der genannten Amine, wie folgt durchgeführt werden (die konkreten Angaben (gekennzeichnet durch "*z.B.*" und "*beispielsweise*") beziehen sich auf die in den Beispielen verwendeten Mannichbasen):
Amin (z.B. 2 mol) wird (beispielsweise in einem 250 ml-Dreihalskolben, welcher mit einem Thermometer, einem Tropftrichter und einer Rührvorrichtung versehen ist) vorgelegt. Unter Rühren wird das vorgelegte Amin mit (z.B. 1 mol) Phenol bzw. styrolisiertem Phenol versetzt. Es wird aufgeheizt (z.B. auf 80 °C). Bei der erreichten Temperatur wird (z.B. innerhalb 45 min) Formaldehyd zugetropft (z.B. 0,7 mol als 37%ige Formaldehydlösung), insbesondere unter starkem Rühren. Nach Ende der Zugabe wird weiter aufgeheizt (beispielsweise auf 105 °C) und die Reaktionsbedingungen für einige Zeit (z.B. 120 min) gehalten. Anschließend wird - beispielsweise unter steigendem Vakuum - bei geeigneter Temperatur (z.B. ca. 110 °C) Wasser abdestilliert, wobei, sobald der Druck stark genug vermindert ist (z.B. auf 50 mbar), die Temperatur weiter erhöht wird (z.B. auf 130 °C) und dann eine Zeitlang (z.B. 60 min) gehalten wird.

Der Anteil aller gegenüber Epoxidgruppen reaktiven Amine (Diamine, Polyamine oder Mannichbasen) in der Härterzusammensetzung (B) beträgt vorzugsweise von 30 bis 98 Gew.-%, bevorzugt von 40 bis 80 Gew.-%, bezogen auf das Gesamtgewicht der Härterzusammensetzung (B).

In einer vorteilhaften Ausführungsform weist die Härterkomponente (B) einen AHEW (Amine Hydrogen Equivalent Weight) von 20 bis 1000 g/EQ auf, bevorzugt von 30 bis 500 g/EQ, bevorzugter von 40 bis 350 g/EQ, noch bevorzugter von 50 bis 225 g/EQ und besonders bevorzugt von 50 bis 150 g/EQ.

Für ein einfaches Amin sei die Errechnung des AHEW am Beispiel von meta-Xylylendiamin rein exemplarisch erläutert:
Allgemeine Formel:

$$\text{H-Äq.} = \frac{Mw}{Funktionalität}$$

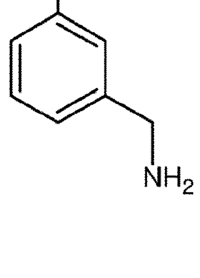

eingesetzt:

$$\text{H-Äq.} = \frac{136}{4}\left[\frac{g}{eq}\right] = 34\left[\frac{g}{eq}\right]$$

Experimentell kann der AHEW-Wert durch Bestimmung der Glasübergangstemperatur (Tg) einer Mischung aus Epoxidharz (mit bekanntem EEW) und Aminkomponente erhalten werden. Es werden dabei die Glasübergangstemperaturen von Epoxidharz/Amin-Mischungen mit unterschiedlichen Verhältnissen bestimmt. Die Probe wird mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("*Tg2*") besitzt das optimale Verhältnis von Epoxidharz und Amin. Aus dem bekannten EEW und dem optimalen Epoxidharz/Amin-Verhältnis lässt sich der AHEW-Wert ebenfalls berechnen.

Beispiel: EEW = 158 g/mol
Mischung Amin/Epoxidharz mit maximaler Tg2: 1 g Amin mit 4,65 g Epoxidharz

$$\text{AHEW (Amin)} = 1*158/4{,}65 = 33{,}9785$$

Als weiterer Bestandteil sind typischerweise Beschleuniger in der Härterkomponente (B) vorhanden. Der Anteil des zugesetzten Beschleunigers hängt vom jeweiligen Beschleuniger, von der für die Anwendung nötigen Aushärtezeit und von den eingesetzten Aminen ab. So beschleunigen Triflate am stärksten, gefolgt von Nitraten. Iodide beschleunigen etwas schwächer. Aufgrund der starken Beschleunigungswirkung der anorganischen Salze sind Konzentrationen zwischen 1 und 10 % ausreichend um nach 24 Stunden eine zufriedenstellende Aushärtung zu erreichen. Weitere bekannte Beschleuniger sind Novolake (einschließlich Bisphenole), styrolisiertes Phenol, para-Toluolsulfonsäure, und Salicylsäure. Diese Beschleuniger können auch kombiniert werden, bekannte Kombinationen sind z. B. Novolak und anorganisches Salz, Novolak und styrolisiertes Phenol, Bisphenol F und p-Toluolsulfonsäure oder styrolisiertes Phenol und Salicylsäure.

Ein Polyphenol (Novolak) wird dargestellt durch die allgemeine Formel (I) oder ein Copolymer verschiedener Alkylphenol- oder Aralkylphenol-Einheiten,

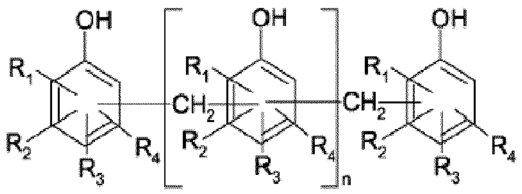

(I)

,

Wobei in Formel (I) $R_1$, $R_2$, $R_3$, $R_4$, jeweils unabhängig voneinander H, verzweigte oder unverzweigte Alkyl-Radikale, oder verzweigte oder unverzweigte Aralkyl-Radikale, enthaltend 1 bis 15 Kohlenstoffatome, darstellen; n beträgt 0 bis 15.

Bevorzugte Novolakharze sind solche, bei denen in Formel (I) $R_1$, $R_2$, $R_3$ und $R_4$ entweder Wasserstoff sind, oder eines oder zwei der Radikale $R_1$ bis $R_4$ das Radikal $CH_3$ ist/sind, oder eines der Radikale $R_1$ bis $R_4$ das tert.-Butylradikal oder ein unverzweigtes oder verzweigtes $C_1$-$C_{15}$-Alkylradikal ist. Bevorzugte Novolakharze sind weiterhin solche mit n zwischen 1 und 15.

Als Co-Beschleuniger kann die Härterkomponente (B) außerdem 2,4,6-Tris(dimethylaminomethyl)phenol (z. B. Ancamine K54, Air Products, NL) oder Benzylalkohol enthalten.

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mindestens eine Si-gebundene hydrolisierbare Gruppe aufweisen, wie beispielsweise N-2-(Aminoethyl)-3-aminopropylmethyl-diethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt. Weitere Silane sind beispielsweise in der EP3000792 A1 beschrieben.

Der Haftvermittler kann in einer Menge bis zu 10 Gew.-%, bevorzugt 0,1 bis 8 Gew.-%, weiter bevorzugt 2,0 bis 6 Gew.-% bezogen auf das Gesamtgewicht der Härterkomponente (B) enthalten sein.

Ferner können in der Härterkomponente (B) gewöhnliche Füllstoffe ($d_{50}$ > 10 $\mu$m) und Thixotropiermittel, wie

bereits vorstehend im Zusammenhang mit der Epoxidharzkomponente (A) beschrieben, vorhanden sein.

Verwendung

Unter einem mehrkomponentigen Befestigungsmörtelsystems ist insbesondere ein Kit mit zwei oder mehreren Komponenten zu verstehen (vorzugsweise ein 2K-System) mit einer Komponente (A), welche ein mehrere Reaktiv-Kunstharze auf Epoxidharzbasis beinhaltet, wie nachstehend weiter beschrieben, und Härter (Komponente (B)), wobei zusätzlich zur Kombination aus Füllstoff (F) und Silan (S) weitere Zusätze in einer oder beider der Komponenten vorgesehen sein können, worin die miteinander reaktionsfähigen Komponenten (A) und (B) und ggf. weitere separate Komponenten so enthalten sind, dass sie während der Lagerung nicht miteinander reagieren können, vorzugsweise so, dass sie vor der Anwendung nicht miteinander in Berührung kommen, die es jedoch ermöglicht, die Komponenten (A) und (B) und gegebenenfalls weitere Komponenten zur Befestigung an der gewünschten Stelle, beispielsweise direkt vor oder in einem Loch oder Spalt, so zu vermischen und erforderlichenfalls einzubringen, dass dort die Härtungsreaktion stattfinden kann. Auch geeignet sind Patronen, beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie insbesondere Mehr- oder bevorzugt Zweikomponentenkartuschen, in deren Kammern die vorzugsweise zwei Komponenten (insbesondere Komponenten (A) und (B)) des erfindungsgemäßen Befestigungsmörtels zur Aufbewahrung vor der Nutzung enthalten sind, wobei vorzugsweise auch ein Statikmischer zum entsprechenden Kit gehören kann. Die Verwendung eines erfindungsgemäßen Befestigungsmörtels am gewünschten Einsatzort erfolgt dann durch Mischen der zugehörigen Komponenten.

Die Komponenten (A) und (B) werden bevorzugt in einem Verhältnis gemischt, das entsprechend der EEW- und AHEW-Werte eine ausgeglichene Stöchiometrie ergibt. Zur bestimmungsgemäßen Anwendung des mehrkomponentigen Befestigungsmörtelsystems werden die Epoxidharzkomponente (A) und die Härterkomponente (B) aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente (B) reagieren mit den Epoxidharzen der Harzkomponente (A) unter Polyaddition, sodass die Epoxidharzmasse unter Umgebungsbedingungen innerhalb einer gewünschten Zeit aushärtet.

Das erfindungsgemäße mehrkomponentige Befestigungsmörtelsystem wird bevorzugt für Bauzwecke eingesetzt. Der Begriff "*für Bauzwecke*" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz.

Ganz besonders bevorzugt dienen die erfindungsgemäßen mehrkomponentigen Befestigungsmörtelsystems zur chemischen Befestigung von Verankerungselementen in einem Loch oder Spalt in einem Bausubstrat.

Die Erfindung betrifft ferner ein Verfahren zur Befestigung von einem Verankerungselement in einem Loch oder Spalt in einem Bausubstrat, bei dem ein mehrkomponentiges Befestigungsmörtelsystem wie vorstehend definiert und ein Verankerungselement in das Loch oder den Spalt eingebracht und aushärten gelassen werden.

Ferner betrifft die Erfindung die Verwendung einer Kombination von (i) mindestens einem Füllstoff (F), ausgewählt aus Oxiden von Silicium und Aluminium, oder Mischoxiden in Gegenwart weiterer Kationen, dessen Mittelkorn $d_{50}$ 10 $\mu$m oder weniger beträgt, und (ii) mindestens einem mindestens eine Si-gebundene hydrolysierbare Gruppe beinhaltendes Silan (S), in einer Komponente eines mehrkomponentigen Befestigungsmörtelsystems zum Erhöhen der Verbundspannung gegenüber Füllstoffen mit größerem Mittelkorn (z.B. $d_{50} > 10$ $\mu$m) oder zum Beschleunigen der Härtung insbesondere bei niedriger Temperatur, wobei das mindestens eine Si-gebundene hydrolysierbare Gruppe beinhaltende Silan (S) in einer Menge von mindestens 3 Gew.-%, bezogen auf das Gesamtgewicht der jeweiligen Komponente, vorliegt.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

## BEISPIELE

Alle hier aufgelisteten Chemikalien und Bestandteile der Zusammensetzungen sind kommerziell erhältlich und wurden in der kommerziell üblichen Qualität eingesetzt, soweit nicht anders angegeben.

Die Bestimmung der Epoxidäquivalent- (EEW; epoxy equivalent weight, d.h. der Menge Harz in g, die 1 Mol Epoxidgruppen enthält) und Aminwasserstoff-Äquivalentgewichts-Werte (AHEW; amine hydrogen equivalent weight, d.h. der Menge Amin in g, die 1 mol reaktives H enthält) in den nachstehenden Beispielen erfolgt in für den Fachmann bekannter Weise anhand der Formulierung der Reaktionsmischung aus den bekannten H-Äquivalenten der verwendeten Edukte und Rohstoffe, aus denen sie errechnet werden. Die EEW-Werte sind in der Regel auf den Ausgangsmaterialien von den Herstellern angegeben oder sie werden nach bekannten Methoden ermittelt bzw. berechnet.

### Herstellung der mehrkomponentigen Befestigungsmörtelsysteme

Die im Titel der Beispiele/Vergleichsbeispiele angegebenen Gehalte an Calciumnitrat beziehen sich auf den Anteil an Calciumnitrat-Tetrahydrat.

Herstellung der Calciumnitrat-Tetrahydrat-Lösung:

Calciumnitrat-Tetrahydrat (CAS-Nr. 13477-34-4, Sigma-Aldrich, D) wurde zu Glycerin (1,2,3-Propantriol, CAS-Nr. 56-81-5, Merck, D) gegeben und bis zur vollständigen Lösung gerührt. Die so hergestellte Lösung enthielt 80,0 % Calciumnitrat-Tetrahydrat.

Die Lösung wird in einigen der nachstehenden Beispiele als Beschleuniger eingesetzt. Alternativ wird beispielsweise Phenolite TD-2131 (ein Novolak von DIC Europe, D, CAS-Nr. 9003-35-4) als Beschleuniger verwendet.

**Beispiel 1:** 4,4 Gew.-% Silan, 8 Gew.-% Aluminiumoxid ($d_{50}$ = 0,6 μm), 1,5 Gew.-% Nitrat

Komponente (A)

| Stoff | Funktion | [Gew.-%] | Handelsname | Hersteller |
|---|---|---|---|---|
| 3-Glycidyloxypropyltrimethoxysilan | Haftvermittler | 4,4 | Dynasylan GLYMO | Evonik Industries, D |
| Bisphenol A-basiertes Epoxidharz | Epoxidharz | 27,3 | Araldite GY 240 | Huntsman, BE |
| Bisphenol F-basiertes Epoxidharz | Epoxidharz | 14,7 | Araldite GY 282 | Huntsman, BE |
| 1,4-Butanediol-diglycidyl ether | Reaktiwerdünner | 5,2 | Araldite DY-206 | Huntsman, BE |
| Trimethyolpropan-triglycidylether | Reaktivverdünner | 5,2 | Araldite DY-T | Huntsman, BE |
| Quarzmehl | Füllstoff | 32,9 | Millisil W12 | Quarzwerke Frechen, D |
| Aluminiumoxid | Füllstoff (F) | 8,0 | RG 4000 | Almatis, D |
| Kieselsäure | Verdicker | 2,3 | Cab-O-Sil TS-720 | Cabot Rheinfelden, D Rheinfelden, D |

EEW = 285 g/EQ

Komponente (B)

| Stoff | Funktion | [Gew.-%] | Handelsname | Hersteller |
|---|---|---|---|---|
| Isophorondiamin | Aminhärter | 21,3 | Vestamin IPD | Evonik Degussa, D |

(fortgesetzt)

| Stoff | Funktion | [Gew.-%] | Handelsname | Hersteller |
|---|---|---|---|---|
| 1,3-Cyclohexandimethanamin | Aminhärter | 21,2 | 1,3-BAC | Itochu Deutschland |
| Calciumnitrat-Tetrahydrat (80% in Glycerin) | Beschleuniger | 1,9 | | |
| Quarz | Füllstoff | 48,8 | Millisil W12 | Quarzwerke Frechen, D |
| Kieselsäure | Verdicker | 6,8 | Aerosil R 805 | Evonik, D |

AHEW = 91 g/EQ

**Beispiel 2:** 5,5 Gew.-% Silan, 16 Gew.-% Aluminiumoxid ($d_{50}$ = 0,6 $\mu$m), 1,5 Gew.-% Nitrat

Komponente (A)

| Stoff | Funktion | [Gew.-%] | Handelsname | Hersteller |
|---|---|---|---|---|
| 3-Glycidyloxypropyltrimethoxysilan | Haftvermittler | 5,5 | Dynasylan GLYMO | Evonik Industries, D |
| Bisphenol A-basiertes Epoxidharz | Epoxidharz | 26,2 | Araldite GY 240 | Huntsman, BE |
| Bisphenol F-basiertes Epoxidharz | Epoxidharz | 14,2 | Araldite GY 282 | Huntsman, BE |
| 1,4-Butanediol-diglycidyl ether | Reaktivverdünner | 5,1 | Araldite DY-206 | Huntsman, BE |
| Trimethyolpropan-triglycidylether | Reaktiwerdünner | 5,1 | Araldite DY-T | Huntsman, BE |
| Quarzmehl | Füllstoff | 25,8 | Millisil W12 | Quarzwerke Frechen, D |
| Aluminiumoxid | Füllstoff (F) | 16,0 | RG 4000 | Almatis, D |
| Kieselsäure | Verdicker | 2,1 | Cab-O-Sil TS- 720 | Cabot Rheinfelden, D |

EEW = 291 g/EQ

Komponente (B)

| Stoff | Funktion | [Gew.-%] | Handelsname | Hersteller |
|---|---|---|---|---|
| Isophorondiamin | Aminhärter | 21,3 | Vestamin IPD | Evonik Degussa, D |
| 1,3-Cyclohexandimethanamin | Aminhärter | 21,2 | 1,3-BAC | Itochu Deutschland |
| Calciumnitrat-Tetrahydrat (80% in Glycerin) | Beschleuniger | 1,9 | | |
| Quarz | Füllstoff | 49,4 | Millisil W12 | Quarzwerke Frechen, D |
| Kieselsäure | Verdicker | 6,2 | Aerosil R 805 | Evonik, D |

AHEW = 91 g/EQ

**Beispiel 3:** 5,5 Gew.-% Silan, 39 Gew.-% Aluminiumoxid ($d_{50}$ = 0,6 μm), 2,5 Gew.-% Nitrat

Komponente (A)

| Stoff | Funktion | [Gew.-%] | Handelsname | Hersteller |
|---|---|---|---|---|
| 3-Glycidyloxypropyl-trimethoxysilan | Haftvermittler | 5,5 | Dynasylan GLYMO | Evonik Industries, D |
| Bisphenol A-basiertes Epoxidharz | Epoxidharz | 27,7 | Araldite GY 240 | Huntsman, BE |
| Bisphenol F-basiertes Epoxidharz | Epoxidharz | 14 , 9 | Araldite GY 282 | Huntsman, BE |
| 1,4-Butanediol-diglycidyl ether | Reaktivverdünner | 5,3 | Araldite DY-206 | Huntsman, BE |
| Trimethyolpropan-triglycidylether | Reaktiwerdünner | 5,3 | Araldite DY-T | Huntsman, BE |
| Aluminiumoxid | Füllstoff (F) | 39,4 | RG 4000 | Almatis, D |
| Kieselsäure | Verdicker | 1,9 | Cab-O-Sil TS-720 | Cabot Rheinfelden, D |

EEW = 278 g/EQ

Komponente (B)

| Stoff | Funktion | [Gew.-%] | Handelsname | Hersteller |
|---|---|---|---|---|
| Isophorondiamin | Aminhärter | 23,5 | Vestamin IPD | Evonik Degussa, D |
| 1,3-Cyclohexandimethanamin | Aminhärter | 23,5 | 1,3-BAC | Itochu Deutschland |
| Calciumnitrat-Tetrahydrat (80% in Glycerin) | Beschleuniger | 2,5 | | |
| Quarz | Füllstoff | 45,3 | Millisil W12 | Quarzwerke Frechen, D |
| Kieselsäure | Verdicker | 5,2 | Aerosil R 805 | Evonik, D |

AHEW = 82 g/EQ

**Beispiel 4:** 5,5 Gew.-% Silan, Siliciumdioxid ($d_{50}$ = 2 μm), 2,5 Gew.-% Nitrat

Komponente (A)

| Stoff | Funktion | [Gew.-%] | Handelsname | Hersteller |
|---|---|---|---|---|
| 3-Glycidyloxypropyltrimethoxysilan | Haftvermittler | 5,5 | Dynasylan GLYMO | Evonik Industries, D |
| Bisphenol A-basiertes Epoxidharz | Epoxidharz | 30,9 | Araldite GY 240 | Huntsman, BE |
| Bisphenol F-basiertes Epoxidharz | Epoxidharz | 16,7 | Araldite GY 282 | Huntsman, BE |
| 1,4-Butanediol-diglycidyl ether | Reaktivverdünner | 6,0 | Araldite DY-206 | Huntsman, BE |
| Trimethyolpropan-triglycidylether | Reaktiwerdünner | 6,0 | Araldite DY-T | Huntsman, BE |

(fortgesetzt)

| Stoff | Funktion | [Gew.-%] | Handelsname | Hersteller |
|---|---|---|---|---|
| Quarzmehl | Füllstoff (F) | 33,1 | Sikron SF 800 | Quarzwerke Frechen, D |
| Kieselsäure | Verdicker | 1,8 | Cab-O-Sil TS-720 | Cabot Rheinfelden, D |

EEW = 250 g/EQ

Komponente (B)

| Stoff | Funktion | [Gew.-%] | Handelsname | Hersteller |
|---|---|---|---|---|
| Isophorondiamin | Aminhärter | 23,5 | Vestamin IPD | Evonik Degussa, D |
| 1,3-Cyclohexandimethanamin | Aminhärter | 23,5 | 1,3-BAC | Itochu Deutschland |
| Calciumnitrat-Tetrahydrat (80% in Glycerin) | Beschleuniger | 2,5 | | |
| Quarz | Füllstoff | 45,3 | Millisil W12 | Quarzwerke Frechen, D |
| Kieselsäure | Verdicker | 5,2 | Aerosil R 805 | Evonik, D |

AHEW = 82 g/EQ

**Beispiel 5:** 5,0 Gew.-% Silan, 34 Gew.-% Aluminiumoxid ($d_{50}$ = 0,6 $\mu$m), Mannichbasenhärter

Komponente (A)

| Stoff | Funktion | [Gew.-%] | Handelsname | Hersteller |
|---|---|---|---|---|
| 3-Glycidyloxypropyltrimethoxysilan | Haftvermittler | 5,0 | Dynasylan GLYMO | Evonik Industries, D |
| Bisphenol A-basiertes Epoxidharz | Epoxidharz | 30,2 | Araldite GY 240 | Huntsman, BE |
| Bisphenol F-basiertes Epoxidharz | Epoxidharz | 16,2 | Araldite GY 282 | Huntsman, BE |
| 1,4-Butanediol-diglycidyl ether | Reaktiwerdünner | 5,8 | Araldite DY-206 | Huntsman, BE |
| Trimethyolpropan-triglycidylether | Reaktiwerdünner | 5,8 | Araldite DY-T | Huntsman, BE |
| Aluminiumoxid | Füllstoff (F) | 34,4 | RG 4000 | Almatis, D |
| Kieselsäure | Verdicker | 2,6 | Cab-O-Sil TS-720 | Cabot Rheinfelden, D |

EEW = 257 g/EQ

Komponente (B)

| Stoff | Funktion | [Gew.-%] | Handelsname | Hersteller |
|---|---|---|---|---|
| mXDA-Resorcin-basierte Mannich-Base in mXDA | Aminhärter | 55,0 | - | - |

(fortgesetzt)

| Stoff | Funktion | [Gew.-%] | Handelsname | Hersteller |
|---|---|---|---|---|
| 3-Aminopropyl-triethoxysilan | Haftvermittler | 2,0 | Dynasylan AMEO | Evonik Degussa, D |
| 2,4,6-Tris(dimethylaminomethyl)phenol, Bis[(dimethylamino)methyl]phenol | Beschleuniger | 3,0 | Ancamine K54 | Air Products, NL |
| Quarz | Füllstoff | 37,7 | Millisil W12 | Quarzwerke Frechen, D |
| Kieselsäure | Verdicker | 2,3 | Cab-O-Sil TS-720 | Cabot Rheinfelden, D |

AHEW = 86 g/EQ

**Beispiel 6:** 5,5 Gew.-% Silan, 30 Gew.-% Aluminiumoxid ($d_{50}$ = 0,6 $\mu$m), 10 Gew.-% Phenolite TD-2131

Komponente (A)

| Stoff | Funktion | [Gew.-%] | Handelsname | Hersteller |
|---|---|---|---|---|
| 3-Glycidyloxypropyl-trimethoxysilan | Haftvermittler | 5,5 | Dynasylan GLYMO | Evonik Industries, D |
| Bisphenol A-basiertes Epoxidharz | Epoxidharz | 32,4 | DER 330 | Dow Europe, CH |
| Bisphenol F-basiertes Epoxidharz | Epoxidharz | 17,4 | DER 354 | Dow Europe, CH |
| 1,4-Butanediol-diglycidyl ether | Reaktivverdünner | 6,2 | Polypox R3 | Dow Europe, CH |
| Trimethyolpropan-triglycidylether | Reaktivverdünner | 6,2 | Araldite DY-T | Huntsman, BE |
| Aluminiumoxid | Füllstoff (F) | 29,8 | RG 4000 | Almatis, D |
| Kieselsäure | Verdicker | 2,5 | Cab-O-Sil TS-720 | Cabot Rheinfelden, D |

EEW = 240 g/EQ

Komponente (B)

| Stoff | Funktion | [Gew.-%] | Handelsname | Hersteller |
|---|---|---|---|---|
| m-Xylylendiamin | Aminhärter | 8,0 | mXDA | Itochu Deutschland |
| 2-Methyl-1,5-pentamethylendiamin | Aminhärter | 32,2 | Dytek A | Invista, NL |
| Novolak | Beschleuniger | 10,2 | Phenolite TD-2131 | DIC Europe, D |
| 2,4,6-Tris(dimethylaminomethyl)phenol, Bis[(dimethylamino)methyl]phenol | Beschleuniger | 2,4 | Ancamine K54 | Air Products, NL |

(fortgesetzt)

| Stoff | Funktion | [Gew.-%] | Handelsname | Hersteller |
|---|---|---|---|---|
| Quarz | Füllstoff | 43,4 | Millisil W4 | Quarzwerke Frechen, D |
| Kieselsäure | Verdicker | 3,8 | Cab-O-Sil TS-720 | Cabot Rheinfelden, D |

AHEW = 74 g/EQ

**Vergleichsbeispiele**

**Vergleichsbeispiel 1:** 2,7 Gew.-% Silan, 1,5 Gew.-% Nitrat

Komponente (A)

| Stoff | Funktion | [Gew.-%] | Handelsname | Hersteller |
|---|---|---|---|---|
| 3-Glycidyloxypropyltrimethoxysilan | Haftvermittler | 2,7 | Dynasylan GLYMO | Evonik Industries, D |
| Bisphenol A-basiertes Epoxidharz | Epoxidharz | 28,2 | Araldite GY 240 | Huntsman, BE |
| Bisphenol F-basiertes Epoxidharz | Epoxidharz | 15,3 | Araldite GY 282 | Huntsman, BE |
| 1,4-Butanediol-diglycidyl ether | Reaktiwerdünner | 5,5 | Araldite DY-206 | Huntsman, BE |
| Trimethyolpropan-triglycidylether | Reaktiwerdünner | 5,5 | Araldite DY-T | Huntsman, BE |
| Quarzmehl | Füllstoff | 40,7 | Millisil W12 | Quarzwerke Frechen, D |
| Kieselsäure | Verdicker | 2,1 | Cab-O-Sil TS-720 | Cabot Rheinfelden, D |

EEW = 281 g/EQ

Komponente (B)

| Stoff | Funktion | [Gew.-%] | Handelsname | Hersteller |
|---|---|---|---|---|
| Isophorondiamin | Aminhärter | 21,3 | Vestamin IPD | Evonik Degussa, D |
| 1,3-Cyclohexandimethanamin | Aminhärter | 21,2 | 1,3-BAC | Itochu Deutschland |
| Calciumnitrat-Tetrahydrat (80% in Glycerin) | Beschleuniger | 1,9 | | |
| Quarz | Füllstoff | 49,4 | Millisil W12 | Quarzwerke Frechen, D |
| Kieselsäure | Verdicker | 6,2 | Aerosil R 805 | Evonik, D |

AHEW = 91 g/EQ

**Vergleichsbeispiel 2:** 2,7 Gew.-% Silan, 8 Gew.-% Aluminiumoxid ($d_{50}$ = 0,6 μm), 1,5 Gew.-% Nitrat

Komponente (A)

| Stoff | Funktion | [Gew.-%] | Handelsname | Hersteller |
|---|---|---|---|---|
| 3-Glycidyloxypropyltrimethoxysilan | Haftvermittler | 2,7 | Dynasylan GLYMO | Evonik Industries, D |
| Bisphenol A-basiertes Epoxidharz | Epoxidharz | 27,7 | Araldite GY 240 | Huntsman, BE |
| Bisphenol F-basiertes Epoxidharz | Epoxidharz | 14,9 | Araldite GY 282 | Huntsman, BE |
| 1,4-Butanediol-diglycidyl ether | Reaktivverdünner | 5,3 | Araldite DY-206 | Huntsman, BE |
| Trimethyolpropan-triglycidylether | Reaktivverdünner | 5,3 | Araldite DY-T | Huntsman, BE |
| Quarzmehl | Füllstoff | 34,0 | Millisil W12 | Quarzwerke Frechen, D |
| Aluminiumoxid | Füllstoff (F) | 8,0 | RG 4000 | Almatis, D |
| Kieselsäure | Verdicker | 2,1 | Cab-O-Sil TS-720 | Cabot Rheinfelden, D |

EEW = 287 g/EQ

Komponente (B)

| Stoff | Funktion | [Gew.-%] | Handelsname | Hersteller |
|---|---|---|---|---|
| Isophorondiamin | Aminhärter | 21,3 | Vestamin IPD | Evonik Degussa, D |
| 1,3-Cyclohexandimethanamin | Aminhärter | 21,2 | 1,3-BAC | Itochu Deutschland |
| Calciumnitrat-Tetrahydrat (80% in Glycerin) | Beschleuniger | 1,9 | | |
| Quarz | Füllstoff | 49,4 | Millisil W12 | Quarzwerke Frechen, D |
| Kieselsäure | Verdicker | 6,2 | Aerosil R 805 | Evonik, D |

AHEW = 91 g/EQ

**Vergleichsbeispiel** 3: 4,4 Gew.-% Silan, Nitrat

Komponente (A)

| Stoff | Funktion | [Gew.-%] | Handelsname | Hersteller |
|---|---|---|---|---|
| 3-Glycidyloxypropyltrimethoxysilan | Haftvermittler | 4,4 | Dynasylan GLYMO | Evonik Industries, D |
| Bisphenol A-basiertes Epoxidharz | Epoxidharz | 27,9 | Araldite GY 240 | Huntsman, BE |
| Bisphenol F-basiertes Epoxidharz | Epoxidharz | 15,0 | Araldite GY 282 | Huntsman, BE |
| 1,4-Butanediol-diglycidyl ether | Reaktiwerdünner | 5,4 | Araldite DY-206 | Huntsman, BE |
| Trimethyolpropan-triglycidylether | Reaktiwerdünner | 5,4 | Araldite DY-T | Huntsman, BE |

(fortgesetzt)

| Stoff | Funktion | [Gew.-%] | Handelsname | Hersteller |
|---|---|---|---|---|
| Quarzmehl | Füllstoff | 39,6 | Millisil W12 | Quarzwerke Frechen, D |
| Kieselsäure | Verdicker | 2,3 | Cab-O-Sil TS-720 | Cabot Rheinfelden, D |

EEW = 279 g/EQ

Komponente (B)

| Stoff | Funktion | [Gew.-%] | Handelsname | Hersteller |
|---|---|---|---|---|
| Isophorondiamin | Aminhärter | 21,3 | Vestamin IPD | Evonik Degussa, D |
| 1,3-Cyclohexandimethanamin | Aminhärter | 21,2 | 1,3-BAC | Itochu Deutschland |
| Calciumnitrat-Tetrahydrat (80% in Glycerin) | Beschleuniger | 1,9 | | |
| Quarz | Füllstoff | 48,8 | Millisil W12 | Quarzwerke Frechen, D |
| Kieselsäure | Verdicker | 6,8 | Aerosil R 805 | Evonik, D |

AHEW = 91 g/EQ

**Vergleichsbeispiel 4:** 5,5 Gew.-% Silan, 1,5 Gew.-% Nitrat

Komponente (A)

| Stoff | Funktion | [Gew.-%] | Handelsname | Hersteller |
|---|---|---|---|---|
| 3-Glycidyloxypropyltrimethoxysilan | Haftvermittler | 5,5 | Dynasylan GLYMO | Evonik Industries, D |
| Bisphenol A-basiertes Epoxidharz | Epoxidharz | 27,7 | Araldite GY 240 | Huntsman, BE |
| Bisphenol F-basiertes Epoxidharz | Epoxidharz | 15,0 | Araldite GY 282 | Huntsman, BE |
| 1,4-Butanediol-diglycidyl ether | Reaktivverdünner | 5,4 | Araldite DY-206 | Huntsman, BE |
| Trimethyolpropantriglycidylether | Reaktiwerdünner | 5,4 | Araldite DY-T | Huntsman, BE |
| Quarzmehl | Füllstoff | 38,9 | Millisil W12 | Quarzwerke Frechen, D |
| Kieselsäure | Verdicker | 2,1 | Cab-O-Sil TS-720 | Cabot Rheinfelden, D |

EEW = 276 g/EQ

Komponente (B)

| Stoff | Funktion | [Gew.-%] | Handelsname | Hersteller |
|---|---|---|---|---|
| Isophorondiamin | Aminhärter | 21,3 | Vestamin IPD | Evonik Degussa, D |

(fortgesetzt)

| Stoff | Funktion | [Gew.-%] | Handelsname | Hersteller |
|---|---|---|---|---|
| 1,3-Cyclohexandimethanamin | Aminhärter | 21,2 | 1,3-BAC | Itochu Deutschland |
| Calciumnitrat-Tetrahydrat (80% in Glycerin) | Beschleuniger | 1,9 | | |
| Quarz | Füllstoff | 49,4 | Millisil W12 | Quarzwerke Frechen, D |
| Kieselsäure | Verdicker | 6,2 | Aerosil R 805 | Evonik, D |

AHEW = 91 g/EQ

**Vergleichsbeispiel 5:** 5,5 Gew.-% Silan, 2,0 Gew.-% Nitrat

Komponente (A)

| Stoff | Funktion | [Gew.-%] | Handelsname | Hersteller |
|---|---|---|---|---|
| 3-Glycidyloxypropyltrimethoxysilan | Haftvermittler | 5,5 | Dynasylan GLYMO | Evonik Industries, D |
| Bisphenol A-basiertes Epoxidharz | Epoxidharz | 30,9 | Araldite GY 240 | Huntsman, BE |
| Bisphenol F-basiertes Epoxidharz | Epoxidharz | 16,7 | Araldite GY 282 | Huntsman, BE |
| 1,4-Butanediol-diglycidyl ether | Reaktivverdünner | 6,0 | Araldite DY-206 | Huntsman, BE |
| Trimethyolpropantriglycidylether | Reaktiwerdünner | 6,0 | Araldite DY-T | Huntsman, BE |
| Quarzmehl | Füllstoff | 33,1 | Millisil W12 | Quarzwerke Frechen, D |
| Kieselsäure | Verdicker | 1,8 | Cab-O-Sil TS-720 | Cabot Rheinfelden, D |

EEW = 250 g/EQ

Komponente (B)

| Stoff | Funktion | [Gew.-%] | Handelsname | Hersteller |
|---|---|---|---|---|
| Isophorondiamin | Aminhärter | 23,5 | Vestamin IPD | Evonik Degussa, D |
| 1,3-Cyclohexandimethanamin | Aminhärter | 23,5 | 1,3-BAC | Itochu Deutschland |
| Calciumnitrat-Tetrahydrat (80% in Glycerin) | Beschleuniger | 2,5 | | |
| Quarz | Füllstoff | 45,3 | Millisil W1 | Quarzwerke Frechen, D |
| Kieselsäure | Verdicker | 5,2 | Aerosil R 805 | Evonik, D |

AHEW = 82 g/EQ

**Vergleichsbeispiel** 6: 5,5 Gew.-% Silan, Aluminiumhydroxid ($d_{50}$ = 1,0 μm), 2,0 Gew.-% Nitrat

Komponente (A)

| Stoff | Funktion | [Gew.-%] | Handelsname | Hersteller |
|---|---|---|---|---|
| 3-Glycidyloxypropyltrimethoxysilan | Haftvermittler | 5,5 | Dynasylan GLYMO | Evonik Industries, D |
| Bisphenol A-basiertes Epoxidharz | Epoxidharz | 32,0 | Araldite GY 240 | Huntsman, BE |
| Bisphenol F-basiertes Epoxidharz | Epoxidharz | 17,2 | Araldite GY 282 | Huntsman, BE |
| 1,4-Butanedioldiglycidyl ether | Reaktivverdünner | 6,1 | Araldite DY-206 | Huntsman, BE |
| Trimethyolpropantriglycidylether | er Reaktiwerdünner | 6,1 | Araldite DY-T | Huntsman, BE |
| Aluminiumhydroxid | Füllstoff | 31,4 | Apyral 60 CD | Nabaltec, D |
| Kieselsäure | Verdicker | 1,7 | Cab-O-Sil TS-720 | Cabot Rheinfelden, D |

EEW = 243 g/EQ

Komponente (B)

| Stoff | Funktion | [Gew.-%] | Handelsname | Hersteller |
|---|---|---|---|---|
| Isophorondiamin | Aminhärter | 23,5 | Vestamin IPD | Evonik Degussa, D |
| 1,3-Cyclohexandimethanamin | Aminhärter | 23,5 | 1,3-BAC | Itochu Deutschland |
| Calciumnitrat-Tetrahydrat (80% in Glycerin) | Beschleuniger | 2,5 | | |
| Quarz | Füllstoff | 45,3 | Millisil W1 2 | Quarzwerke Frechen, D |
| Kieselsäure | Verdicker | 5,2 | Aerosil R 805 | Evonik, D |

AHEW = 82 g/EQ

**Vergleichsbeispiel 7:** 5,0 Gew.-% Silan, Mannichbasenhärter

Komponente (A)

| Stoff | Funktion | [Gew.-%] | Handelsname | Hersteller |
|---|---|---|---|---|
| 3-Glycidyloxypropyltrimethoxysilan | Haftvermittler | 5,0 | Dynasylan GLYMO | Evonik Industries, D |
| Bisphenol A-basiertes Epoxidharz | Epoxidharz | 33,4 | Araldite GY 240 | Huntsman, BE |
| Bisphenol F-basiertes Epoxidharz | Epoxidharz | 18,0 | Araldite GY 282 | Huntsman, BE |
| 1,4-Butanediol-diglycidyl ether | Reaktivverdünner | 6,4 | Araldite DY-206 | Huntsman, BE |
| Trimethyolpropantriglycidylether | Reaktivverdünner | 6,4 | Araldite DY-T | Huntsman, BE |

(fortgesetzt)

| Stoff | Funktion | [Gew.-%] | Handelsname | Hersteller |
|---|---|---|---|---|
| Quarz | Füllstoff | 28,2 | Millisil W12 | Quarzwerke Frechen, D |
| Kieselsäure | Verdicker | 2,6 | Cab-O-Sil TS-720 | Cabot Rheinfelden, D |

EEW = 234 g/EQ

Komponente (B)

| Stoff | Funktion | [Gew.-%] | Handelsname | Hersteller |
|---|---|---|---|---|
| mXDA-Resorcin-basierte Mannichbase in mXDA | Aminhärter | 55,0 | - | - |
| 3-Aminopropyl-triethoxysilan | Haftvermittler | 2,0 | Dynasylan AMEO | Evonik Degussa, D |
| 2,4,6-Tris(dimethylaminomethyl)phenol, Bis[(dimethylamino)methyl]phenol | Beschleuniger | 3,0 | Ancamine K54 | Air Products, NL |
| Quarz | Füllstoff | 37,7 | Millisil W12 | Quarzwerke Frechen, D |
| Kieselsäure | Verdicker | 2,3 | Cab-O-Sil TS-720 | Cabot Rheinfelden, D |

AHEW = 86 g/EQ

**Vergleichsbeispiel 8:** 5,5 Gew.-% Silan, 10 Gew.-% Phenolite TD-2131

Komponente (A)

| Stoff | Funktion | [Gew.-%] | Handelsname | Hersteller |
|---|---|---|---|---|
| 3-Glycidyloxypropyltrimethoxysilan | Haftvermittler | 5,5 | Dynasylan GLYMO | Evonik Industries, D |
| Bisphenol A-basiertes Epoxidharz | Epoxidharz | 35,1 | DER 330 | Dow Europe, CH |
| Bisphenol F-basiertes Epoxidharz | Epoxidharz | 18,9 | DER 354 | Dow Europe, CH |
| 1,4-Butanediol-diglycidyl ether | Reaktivverdünner | 6,8 | Polypox R3 | Dow Europe, CH |
| Trimethyolpropantriglycidylether | Reaktiwerdünner | 6,8 | Araldite DY-T | Huntsman, BE |
| Quarz | Füllstoff | 24,2 | Millisil W12 | Quarzwerke Frechen, D |
| Kieselsäure | Verdicker | 2,7 | Cab-O-Sil TS-720 | Cabot Rheinfelden, D |

EEW = 222 g/EQ

Komponente (B)

| Stoff | Funktion | [Gew.-%] | Handelsname | Hersteller |
|---|---|---|---|---|
| m-Xylylendiamin | Aminhärter | 8,0 | mXDA | Itochu Deutschland |
| 2-Methyl-1,5-pentamethylendiamin | Aminhärter | 32,2 | Dytek A | Invista, NL |
| Novolak | Beschleuniger | 10,2 | Phenolite TD-2131 | DIC Europe, D |
| 2,4,6-Tris(dimethylaminomethyl)phenol, Bis[(dimethylamino)methyl]phenol | Beschleuniger | 2,4 | Ancamine K54 | Air Products, NL |
| Quarz | Füllstoff | 43,4 | Millisil W4 | Quarzwerke |
| Kieselsäure | Verdicker | 3,8 | Cab-O-Sil TS-720 | Cabot Rheinfelden, D |

AHEW = 74 g/EQ

**ANWENDUNGSBEISPIELE**

Die Komponenten A und B werden in Hartkartuschen mit dem Volumenverhältnis 3 : 1 abgefüllt und über einen statischen Mischer ins Bohrloch injiziert. In der Regel hat der Mörtel in der Hartkartusche Raumtemperatur, für die Tests zur Aushärtung bei -5°C (B4) wird der Mörtel aber auf +5°C gebracht.

Für Auszugsversuche mit Gewindestangen M12 wird, gemäß EAD 330499-00-0601, wie folgt vorgegangen: Zunächst werden Bohrlöcher (Durchmesser 14 mm; Tiefe ca. 62 mm) in einen horizontal liegenden Betonprüfkörper (Festigkeitsklasse C20/25) mit einem Hammerbohrer eingebracht. Die Bohrlöcher werden gereinigt. Die Anzahl und Art der jeweiligen Reinigungsschritte richtet sich nach der Versuchsart (s. dort). Anschließend werden die Bohrlöcher vom Bohrgrund her mit der jeweiligen zu prüfenden härtbaren Masse für Befestigungszwecke zu zwei Dritteln befüllt. Je Bohrloch wird eine Gewindestange von Hand eingedrückt. Der Mörtelüberschuss wird mittels eines Spachtels entfernt. Nach der für den jeweiligen Versuch angegebenen Zeit und Temperatur wird die Gewindestange gezogen bis zum Versagen unter Messung der Versagenslast.

B4 -5°C
Trockener Beton; hammergebohrt
Reinigung = 2x Ausblasen (Druckluft) 6 bar, 2x Bürsten, 2x Ausblasen (Druckluft 6 bar) Einbindetiefe 60 mm
Aushärtung 168 h bei -5°C
Abstützung confined (eng)

| | **B4 -5°C [N/mm$^2$] nach 168 Stunden Härtungszeit** |
|---|---|
| Beispiel 1 | 30,9 |
| Beispiel 2 | 30,6 |
| Beispiel 3 | 29,7 |
| Beispiel 4 | 29,8 |
| Beispiel 5 | 25,2 |
| | **B4 -5°C [N/mm$^2$] nach 72 Stunden Härtungszeit** |
| Beispiel 6 | 30,5 |

| | B4 -5°C [N/mm$^2$] nach 168 Stunden Härtungszeit |
|---|---|
| Vergleichsbeispiel 1 | 28,1 |
| Vergleichsbeispiel 2 | 26,6 |
| Vergleichsbeispiel 3 | 27,6 |
| Vergleichsbeispiel 4 | 28,7 |
| Vergleichsbeispiel 5 | 27,3 |
| Vergleichsbeispiel 6 | 28,1 |
| Vergleichsbeispiel 7 | 23,6 |
| | B4 -5°C [N/mm2] nach 72 Stunden Härtungszeit |
| Vergleichsbeispiel 8 | 26,6 |

**Patentansprüche**

1. Mehrkomponentiges Befestigungsmörtelsystem, welches in einer Komponente (A) Reaktiv-Kunstharz auf Epoxidharzbasis und in einer weiteren Komponente (B) Härter beinhaltet, wobei in mindestens einer der Komponenten (A) oder (B) weiterhin eine Kombination von

   (i) mindestens einem Füllstoff (F), ausgewählt aus Oxiden von Silicium und Aluminium, oder Mischoxiden in Gegenwart weiterer Kationen, dessen Mittelkorn $d_{50}$ 10 µm oder weniger beträgt, und
   (ii) mindestens einem mindestens eine Si-gebundene hydrolysierbare Gruppe beinhaltendes Silan (S) in einer Menge von mindestens 3 Gew.-%, bezogen auf das Gesamtgewicht der jeweiligen Komponente, vorliegt; oder der Füllstoff (F) in mit einem derartigen Silan (S) modifizierter Form vorliegt.

2. Mehrkomponentiges Befestigungsmörtelsystem gemäß Anspruch 1, wobei der Füllstoff (F) in einer Menge von mindestens 5 Gew.-%, bezogen auf das Gesamtgewicht der jeweiligen Komponente, vorliegt.

3. Mehrkomponentiges Befestigungsmörtelsystem gemäß Anspruch 1 oder 2, wobei die Kombination aus mindestens einem Füllstoff (F) und mindestens einem Silan (S) in der Komponente (A) vorliegt.

4. Mehrkomponentiges Befestigungsmörtelsystem gemäß einem der Ansprüche 1 bis 3, wobei der mindestens eine Füllstoff (F) ein Mittelkorn $d_{50}$ von 5 µm oder weniger, vorzugsweise von 2,5 µm oder weniger, stärker bevorzugt von 1 µm oder weniger, aufweist.

5. Mehrkomponentiges Befestigungsmörtelsystem gemäß einem der Ansprüche 1 bis 4, wobei der mindestens eine Füllstoff (F) ausgewählt ist aus der Gruppe, bestehend aus Siliciumdioxid, Aluminiumoxid oder Mischoxiden hiervon gegebenenfalls in zusätzlicher Gegenwart von ein oder mehreren Oxiden, ausgewählt aus Oxiden der Gruppe von Metallen, die insbesondere aus Calcium, Titan, Eisen, Natrium oder dergleichen besteht; vorzugsweise aus Quarz, Silikaten, oder Aluminiumoxid, insbesondere $\alpha$-Aluminiumoxid.

6. Mehrkomponentiges Befestigungsmörtelsystem gemäß einem der Ansprüche 1 bis 5, wobei das Silan (S) aus 3-(Meth)acryloyl-oxypropyltrialkoxysilan, 3-(Meth)acryloyl-oxymethyltrialkoxysilan, 3-(Meth)acryloyl-oxypropylmethyldialkoxysilan, 3-Glycidyloxypropyltrialkoxysilan, Glycidyloxymethyltrialkoxysilan, 3-Glycidyloxypropylmethyldialkoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyl-trialkoxysilan, N-Phenyl-3-aminoethyl-3-aminopropyltrialkoxysilan, 2-Aminoethyl-3-aminopropyl-trialkoxysilan, Bis-(3-trialkoxysilylpropyl)amin, 3-Mercaptopropyltrialkoxysilan, 3-Mercaptopropylmethyldialkoxysilan, Alkenylalkoxysilan, Trialkoxysilylpropyldiethylentetramin und/oder Tetraalkoxysilan, oder einem Gemisch von zwei oder mehreren davon, ausgewählt ist, und/oder der Füllstoff (F) mit dem Silan (S) oberflächenmodifiziert ist.

7. Mehrkomponentiges Befestigungsmörtelsystem gemäß Anspruch 6, wobei das Silan (S) aus 3-Glycidyloxypropyltrialkoxysilan, Glycidyloxymethyltrialkoxysilan, 3-Glycidyloxypropylmethyldi-alkoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyl-trialkoxysilan, N-Phenyl-3-aminoethyl-3-aminopropyl-trialkoxysilan, 2-Aminoethyl-3-aminopropyl-trialkoxysilan, Bis-(3-trialkoxysilylpropyl)amin, Trialkoxysilylpropyldiethylentetramin und/oder Tetraalkoxysilan, oder einem Gemisch von zwei oder mehreren davon, ausgewählt ist.

**8.** Mehrkomponentiges Befestigungsmörtelsystem gemäß einem der Ansprüche 1 bis 7 in Form eines Zwei-Komponenten-Systems.

**9.** Verwendung eines mehrkomponentiges Befestigungsmörtelsystems nach einem der Ansprüche 1 bis 8 zum Befestigen von Verankerungselementen in einem Loch oder Spalt in einem Bausubstrat.

**10.** Verfahren zur Befestigung von einem Verankerungselement in einem Loch oder Spalt in einem Bausubstrat, bei dem ein mehrkomponentiges Befestigungsmörtelsystem nach einem der Ansprüche 1 bis 8 und ein Verankerungselement in das Loch oder den Spalt eingebracht und aushärten gelassen werden.

**11.** Verwendung einer Kombination von (i) mindestens einem Füllstoff (F), ausgewählt aus Oxiden von Silicium und Aluminium, oder Mischoxiden in Gegenwart weiterer Kationen, dessen Mittelkorn $d_{50}$ 10 μm oder weniger beträgt, und (ii) mindestens einem mindestens eine Si-gebundene hydrolysierbare Gruppe beinhaltendes Silan (S), in einer Komponente eines mehrkomponentigen Befestigungsmörtelsystems zum Erhöhen der Verbundspannung gegenüber Füllstoffen mit größerem Mittelkorn oder zum Beschleunigen der Härtung insbesondere bei niedriger Temperatur, wobei das mindestens eine Si-gebundene hydrolysierbare Gruppe beinhaltende Silan (S) in einer Menge von mindestens 3 Gew.-%, bezogen auf das Gesamtgewicht der jeweiligen Komponente, vorliegt.

Europäisches Patentamt
European Patent Office
Office européen des brevets

# EUROPÄISCHER RECHERCHENBERICHT

Nummer der Anmeldung
EP 20 18 8031

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2020/058017 A1 (HILTI AG [LI]) 26. März 2020 (2020-03-26) * Beispiel 11 * * Tabellen 1, 5, 10 * * Absatz [0101] - Absatz [0107] * ----- | 1-11 | INV. C04B26/14 C04B24/42 |
| E | EP 3 733 731 A1 (HILTI AG [LI]) 4. November 2020 (2020-11-04) * Beispiel 1 * * Tabellen 1, 4, 6 * * Absatz [0117] - Absatz [0121] * ----- | 1,3-11 | |
| T | Cabot Corp.: "CAB-O-SIL TS-720 FUMED SILICA", , 22. August 2017 (2017-08-22), XP055757957, Gefunden im Internet: URL:http://www.cabotcorp.com/~/media/files/product-datasheets/datasheet-cab-o-sil-ts720pdf.pdf [gefunden am 2020-12-08] * das ganze Dokument * ----- | 1-11 | |
| T | Kerneos Sa: "Secar Range", , 11. Juni 2013 (2013-06-11), XP055758011, Gefunden im Internet: URL:http://www.secar.net/IMG/pdf/Brochure_REF_SECAR-Range_UK_20110803_LD.pdf [gefunden am 2020-12-08] * das ganze Dokument * ----- | 1-11 | RECHERCHIERTE SACHGEBIETE (IPC) C04B |
| A,D | EP 2 826 796 A1 (HILTI AG [LI]) 21. Januar 2015 (2015-01-21) * das ganze Dokument * ----- | 1-11 | |

Der vorliegende Recherchenbericht wurde für alle Patentansprüche erstellt

1

| Recherchenort | Abschlußdatum der Recherche | Prüfer |
|---|---|---|
| Den Haag | 8. Dezember 2020 | Placke, Daniel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 20 18 8031

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-12-2020

| Im Recherchenbericht angeführtes Patentdokument | Datum der Veröffentlichung | Mitglied(er) der Patentfamilie | Datum der Veröffentlichung |
|---|---|---|---|
| WO 2020058017 A1 | 26-03-2020 | EP 3626756 A1 | 25-03-2020 |
| | | WO 2020058017 A1 | 26-03-2020 |
| EP 3733731 A1 | 04-11-2020 | EP 3733731 A1 | 04-11-2020 |
| | | WO 2020221608 A1 | 05-11-2020 |
| EP 2826796 A1 | 21-01-2015 | AU 2014292018 A1 | 11-02-2016 |
| | | CA 2918362 A1 | 22-01-2015 |
| | | CN 105377937 A | 02-03-2016 |
| | | EP 2826796 A1 | 21-01-2015 |
| | | EP 2826798 A1 | 21-01-2015 |
| | | EP 3022245 A1 | 25-05-2016 |
| | | EP 3489269 A1 | 29-05-2019 |
| | | ES 2707328 T3 | 03-04-2019 |
| | | ES 2708751 T3 | 11-04-2019 |
| | | HK 1215716 A1 | 09-09-2016 |
| | | JP 2016532742 A | 20-10-2016 |
| | | RU 2016105299 A | 23-08-2017 |
| | | SG 11201600309R A | 26-02-2016 |
| | | US 2016159690 A1 | 09-06-2016 |
| | | WO 2015007879 A1 | 22-01-2015 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2826796 A
- EP 3626756 A
- EP 3000792 A
- EP 0824124 A
- EP 3000792 A1


### In der Beschreibung aufgeführte Nicht-Patentliteratur


- IUPAC Compendium of Chemical Terminology. **A. D. MCNAUGHT ; A. WILKINSON.** Gold Book. Blackwell Scientific Publications, 1997
- **MICHAEL DORNBUSCH ; ULRICH CHRIST ; ROB RASING.** Epoxidharze. Vincentz Network GmbH & Co KG, 2015
- **LEE H ; NEVILLE K.** Handbook of Epoxy Resins. McGraw-Hill, 1982